# DEMANDE DE BREVET EUROPEEN

(11) **EP 2 108 629 A1**
(43) Date de publication de la demande: **14.10.2009**
(21) Numéro de dépôt: 09290174.3
(22) Date de dépôt: 11.03.2009
(51) Int. Cl.: C04B 28/02, C04B 28/10, B28B 1/52, B28B 3/02, B28B 19/00

(54) **Materiau de construction permettant de diminuer la concentration en composés organiques volatils dans l'air**

(30) Priorité: 31.03.2008 FR 0852107
(71) Demandeur: Knauf, 68600 Wolfgantzen (FR)
(72) Inventeur: Burger, Bruno, 68770 Ammerschwihr (FR); Simonin, Raymond, 70200 La Cote (FR)
(74) Mandataire: Novagraaf IP

(57) **Abrégé**

L'invention concerne un matériau de construction comportant des fibres de bois et un liant hydraulique, le liant hydraulique étant constitué de 3% à 50% en poids de zéolithe, de 20% à 70% en poids de ciment et de 20% à 40% en poids de chaux. Ce matériau de construction permet d'épurer l'air d'une pièce en adsorbant les composés organiques volatils qu'il contient, tout en ayant une très bonne résistance mécanique et en étant très isolant thermique et acoustique. L'invention concerne également un procédé permettant de réaliser un tel matériau.

## Description

### DOMAINE TECHNIQUE DE L'INVENTION

La présente invention concerne un matériau de construction permettant de réduire la quantité de composés organiques volatils présents dans l'air ambiant d'une pièce. La présente invention concerne également un procédé de fabrication de ce matériau de construction.

### ÉTAT DE LA TECHNIQUE ANTÉRIEURE

Les composés organiques volatils (COV) sont des substances chimiques à base de carbone et d'hydrogène (alcools, aldéhydes, cétones, éthers de glycols, terpènes, formaldéhydes, acétaldéhyde, etc.). Ces composés organiques volatils sont présents dans la plupart des peintures, matériaux de construction, dissolvants, détergents, combustibles, ainsi que dans le mobilier, les appareils électriques ou encore dans les fumées de cigarettes.

Or la présence dans l'environnement de ces composés organiques volatils est aujourd'hui considérée comme un facteur défavorable pour l'évaluation de la qualité de l'air, notamment dans l'habitat, car l'exposition ponctuelle ou prolongée à certains COV, comme le benzène ou les formaldéhydes, peut présenter des risques pour la santé puisqu'ils sont potentiellement toxiques. En particulier, ces composés organiques volatils peuvent provoquer des réactions allergiques, des problèmes respiratoires, des nausées, un inconfort, un état de fatigue ou de somnolence, ou des maux de tête. Certains d'entre eux sont donc considérés comme nocifs pour la santé, voire cancérigènes pour d'autres.

La présence de ces composés organiques volatils est particulièrement gênante à l'intérieur des bâtiments, surtout lorsque ceux-ci sont bien isolés, car les composés organiques volatils s'accumulent alors dans l'air ambiant des pièces.

La solution la plus simple pour réduire la concentration de composés organiques dans l'air consisterait à maîtriser les émissions de ces polluants. Cependant, cette solution est difficile à mettre en oeuvre car les composés organiques volatils sont présents dans la plupart des produits et des matériaux qui nous entourent.

Différents moyens permettant de réduire la quantité de composés organiques volatils dans l'air ont donc été développés. Ainsi le brevet EP1808420 décrit l'utilisation de zéolithes dans un matériau de construction comportant en outre un liant et des agrégats, ce matériau de construction permettant de réduire la quantité de composés organiques volatils de l'air. Ce matériau est efficace pour absorber les composés organiques volatils avec lesquels il est mis en contact. Cependant, ce type de matériau est rarement en contact direct avec l'air ambiant d'une pièce, et de ce fait, la quantité de composés organiques volatils absorbée est moindre. Par ailleurs, ce matériau est un mauvais isolant thermique et acoustique.

L'art antérieur connaît également la demande de brevet de brevet EP1663906 relative à un matériau de construction de type crépi ou enduit, à base de plâtre et de zéolithe, qui permet de diminuer la concentration de composés organiques volatils dans l'air. Ce matériau de construction permet donc d'absorber efficacement les polluants de l'air. Cependant, il ne peut pas être utilisé sur tout type de surface car c'est un mauvais isolant et il est peu solide mécaniquement, en particulier, il a tendance à s'effriter.

### EXPOSÉ DE L'INVENTION

La présente invention vise à pallier les inconvénients de l'état de la technique en proposant un matériau de construction qui soit solide, qui permette de faire de l'absorption acoustique, d'améliorer le degré coupe feu des isolants associés et la réaction au feu. Le matériau selon l'invention permet également de réaliser des panneaux de toutes formes et de tous formats, c'est-à-dire d'épaisseur et de dimensions variées, suivant les caractéristiques des moules utilisés. Ce type de matériau permet également d'améliorer sensiblement l'isolation thermique et de réduire conjointement la quantité de polluants dans l'air.

Pour cela, la présente invention propose de réaliser un matériau composite à base de zéolithes, de fibres de bois et d'un liant hydraulique.

Plus précisément, la présente invention concerne un matériau de construction permettant de réduire la quantité de composés organiques volatiles présents dans l'air ambiant d'un local, comportant :
- entre 40% et 60% de fibres de bois formant de la laine de bois,
- entre 40% et 60% d'un liant hydraulique comprenant :
   - entre 3% et 50% en poids de zéolithes
   - entre 20% et 70% en poids de ciment, et
   - entre 20% et 40% de chaux.

Les quantités de fibres de bois et de liant hydraulique utilisées dépendent essentiellement des performances mécaniques, thermiques, acoustiques et de résistance au feu recherchées.

Ainsi la présente invention propose un matériau de construction à base de fibres naturelles qui est isolant thermiquement et acoustiquement grâce aux fibres de bois, qui est également solide sur le plan mécanique, qui résiste au feu, et qui permet en outre de diminuer la concentration de polluants dans l'air, et en particulier la concentration de composés organiques volatils dans l'air grâce à l'action des zéolithes. Ce matériau de construction permet donc d'améliorer la qualité de l'air qui l'entoure.

En effet, la structure cristalline et micro poreuse des zéolithes leur confère des propriétés très intéressantes. Ainsi, la principale propriété de la zéolithe est son pouvoir de catalyse, c'est-à-dire qu'elle génère une réaction chimique, qui transforme les polluants, sur lesquels elle agit, en substances non dangereuses pour la santé, comme le dioxyde de carbone et l'eau. Cette catalyse a lieu à la surface des zéolithes.

En effet, les composés organiques volatils s'adsorbent à la surface des zéolithes avec lesquelles ils ont une très grande affinité chimique, ce qui permet aux zéolithes de fixer à leur surface les composés organiques volatils présents dans l'air ambiant. Une fois fixés à la surface des zéolithes, les composés organiques volatils sont décomposés par catalyse chimique et transformés en substances non dangereuses pour la santé, comme le dioxyde de carbone et l'eau. Cette catalyse chimique, par oxydation catalytique, permet donc de purifier l'air d'un local. Par ailleurs, les zéolithes ne sont nullement endommagées par cette réaction puisqu'il s'agit d'une réaction de catalyse. En effet, une fois décomposés, les composés organiques volatils, qui sont sous forme de gaz carbonique ou de vapeur d'eau s'évaporent dans l'air, si bien que la surface des zéolithes est à nouveau libre pour catalyser de nouveaux composés organiques volatils. Ainsi l'efficacité de ce matériau est constante au cours du temps.

L'efficacité de ce matériau augmente avec la surface d'échange, c'est-à-dire avec la surface spécifique des zéolithes. Ainsi, plus les zéolithes sont poreuses et/ou plus leurs diamètres sont petits, plus leur surface spécifique est grande et donc plus la surface disponible pour la catalyse est grande.

Le rendement d'élimination du total des composés organiques volatils (TCOV) de ce matériau est globalement compris entre 50% et 80%.

La volatilité des composés organiques volatils leur permet de diffuser dans le volume du matériau de construction, même lorsque celui-ci est recouvert d'une couche de peinture, et donc d'être catalysé par une grande quantité de zéolithes, d'autant que le mélange ciment/chaux est poreux, ce qui permet aux composés organiques volatils d'accéder aux zéolithes présentes dans le volume du matériau.

Par ailleurs, le matériau ainsi constitué présente une très bonne résistance au feu, un excellent comportement mécanique et un très bon état de surface, ce qui lui permet de résister aux agressions extérieures. En outre, ce matériau résiste très bien à l'usure et au temps, grâce à la présence du liant hydraulique, qui enrobe et minéralise les fibres de bois. En effet, l'imprégnation de la laine de bois par le liant hydraulique garantit la conservation des fibres : en particulier, la minéralisation de la laine de bois formée par les fibres de bois rend le matériau imputrescible.

Avantageusement, les zéolithes utilisées sont des zéolithes naturelles. Ainsi ce matériau est réalisé essentiellement à base de matériaux naturels, ce qui en fait un très bon matériau sur le plan écologique et qui permet de réaliser des économies sur le plan énergétique lors de sa fabrication à l'échelle industrielle.

Avantageusement, les fibres de bois sont des fibres de résineux, comme par exemple des fibres d'épicéa, puisque ces fibres sont très hydrophiles, ce qui favorise l'enrobage des fibres de bois par le liant hydraulique et donc augmente la cohérence et la résistance mécanique du matériau ainsi constitué. En outre, les fibres de bois peuvent être réalisées à partir de chutes de bois ou de petits morceaux de bois qui ne pourraient pas être valorisés autrement, si bien que ce matériau est intéressant pour la préservation de l'environnement.

Avantageusement, les zéolithes sont incorporées au matériau de construction sous forme de granulats ou de particules, ces particules ayant un diamètre compris entre 0,005 mm et 0,05 mm. La quantité et la taille des zéolithes dépendent des quantités de polluants à absorber, ainsi que de la consistance voulue pour le matériau de construction.

Avantageusement, les zéolithes utilisées sont composées d'une ou plusieurs des substances suivantes : SiO₂, MgO, Al₂O₃, Na₂O, CaO, TiO₂, K₂O, Fe₂O₃, Si/Al. Les zéolithes peuvent être d'origine naturelle ou artificielle.

Le matériau de construction est de préférence utilisé pour réduire la quantité d'un ou plusieurs composés organiques volatils pris dans un groupe formé par les formaldéhydes, les acétaldéhydes, le benzène, l'ammoniac, les fumées de cigarettes, le benzol.

L'invention concerne aussi une paroi isolante comportant un matériau de construction selon l'un des modes de réalisation décrits précédemment.

L'invention concerne également un procédé de fabrication d'un élément de construction permettant de réduire la quantité de composés organiques volatiles présents dans l'air ambiant d'un local, comportant les étapes suivantes :
- on réalise des préformes en fibres de bois,
- on humidifie les préformes, de façon à ce que les préformes humidifiées aient un taux d'humidité compris entre 20% et 40%.
- on imprègne les préformes avec un mélange comportant de la chaux, du ciment et des zéolithes, le mélange comportant entre 3% et 50% en poids de zéolithes, entre 20% et 70% en poids de ciment et entre 20% et 40% de chaux,
- on compacte les préformes,
- on sèche les préformes.

Le mélange comprend avantageusement entre 5% et 15% de zéolithes.

Ainsi les préformes sont réalisées à partir de laine de bois, constituées de fibres de bois, de préférence de fibres de résineux, qui sont minéralisées et enrobées de liant hydraulique.

Avantageusement, la composition et la quantité de zéolithes incorporées dans le matériau de construction sont choisies en fonction de la quantité et de la nature des composés organiques volatils à absorber.

En particulier, les particules de zéolithes sont plus petites et/ou plus poreuses lorsque les quantités de composés organiques volatils à adsorber sont plus importantes. Par ailleurs, la composition des zéolithes est choisie de façon à ce que la zéolithe utilisée ait une grande affinité chimique avec le composé organique volatil dont on veut diminuer la concentration dans l'air ambiant d'un local.

Les éléments de construction réalisés par ce procédé sont de préférence des dalles, des panneaux ou des plaques. Ces éléments de construction peuvent être utilisés en tant que coffrage isolant ou en tant que fond de coffrage. Par ailleurs, ces éléments peuvent aussi être utilisés comme faux-plafond ou comme élément d'isolation intérieure.

### BRÈVE DESCRIPTION DES FIGURES

D'autres caractéristiques et avantages de l'invention ressortiront à la lecture de la description qui suit, en référence aux figures annexées, qui illustrent :
- la figure 1, une représentation schématique du procédé de fabrication selon l'invention, et
- la figure 2, une dalle selon l'invention.

Pour plus de clarté, les éléments identiques ou similaires sont repérés par des signes de référence identiques sur l'ensemble des figures.

### DESCRIPTION DÉTAILLVE D'UN MODE DE RÉALISATION

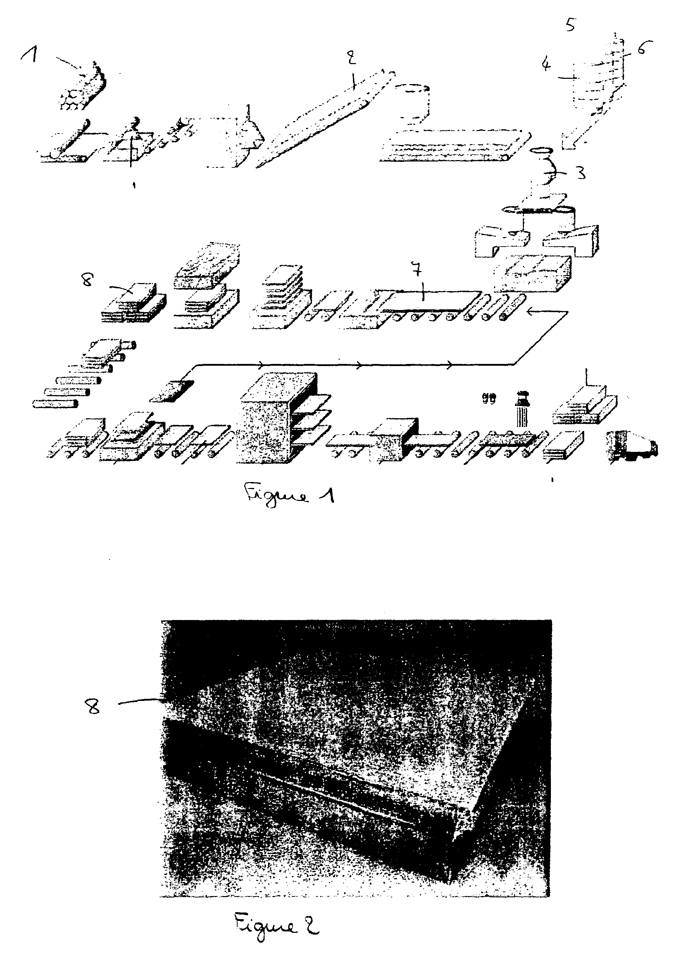

La figure 1 représente le procédé de fabrication de dalles de plafond selon un mode de réalisation de la présente invention. Dans un premier temps, des billes de bois 1 sont défibrées afin d'obtenir des fibres d'environ 1 cm de long et d'un diamètre d'environ 0,2 mm. Le bois utilisé est de l'épicéa. Ces fibres de bois sont ensuite rassemblées pour former une préforme 2 de dalle. Cette préforme 2 de dalle est humidifiée, de façon à ce que le taux d'humidité de la dalle soit environ égal à 30%.

Parallèlement, un liant hydraulique 3 est préparé, à l'aide de 10% en poids de zéolithes 4, 60% en poids de ciment blanc 5 et 30% en poids de chaux blanche 6. La zéolithe 4 utilisée est une zéolithe naturelle dont la formule chimique est la suivante : (Ca, K₂, Na₂, Mg)₄Al₉Si₄0₉₈.^{24H}₂O.

Cette zéolithe 4 contient entre 65% et 71,3% de SiO₂, entre 0,6 et 1,2% de MgO, entre 11,5% et 13,1% de Al₂O₃, entre 0,2% et 1,3% de Na₂O, entre 2,7% et 5,2% de CaO, entre 0,1 % et 0,3% de TiO₂, entre 2,2% et 3,4% de K₂O, entre 0,7% et 1,9% de Fe₂O₃ et entre 4,8% et 5,4% de Si/Al.

Ce liant hydraulique 3 est ensuite réparti sur les préformes 2 de dalles, de façon à ce qu'il enrobe les fibres de bois.

Les dalles 7 ainsi obtenues sont ensuite empilées et pressées de façon à obtenir une dalle 8 plus épaisse. L'épaisseur de la dalle 8 dépend des caractéristiques mécaniques, de résistance au feu, thermiques et acoustiques recherchées.

On laisse ensuite reposer les dalles 8 obtenues entre 3 et 10 jours puis on les sèche. Les dalles 8 peuvent ensuite être usinées, puis peintes selon les besoins.

Une telle dalle 8, d'une dimension de 0,60m*0,67m a donc été réalisée selon le procédé précédemment décrit, à partir de 1 kg de zéolithe, 7,2 kg d'un mélange de ciment blanc et de chaux et de 4 kg de fibres de bois. Les performances de cette dalle en matière de purification de l'air ont ensuite été testées.

Pour cela, la dalle a été fixée sur un support en acier inox et les bords ont été recouverts de papier aluminium à l'aide d'un adhésif faiblement émissif comme représenté sur la figure 2. L'éprouvette ainsi réalisée a été conditionnée dans une chambre d'essai en acier inox d'un volume de 1 m³. Les paramètres de cette chambre sont résumés dans le tableau ci-après :

| **Paramètres d'essai** | **Conditions analytiques** |
|---|---|
| Chambre d'essai d'émission | Weiss Technik (inox) |
| Volume de la chambre | 1 m³ |
| Température | 23 ± 2 °C |
| Humidité relative | 50 ± 5 % |
| Surface de l'éprouvette | 0,4 m² |
| Débit d'air | 0,5 m³.h⁻¹ |
| Taux de renouvellement de l'air | 0,5 h⁻¹ |
| Taux de charge | 0,4 m².m⁻³ |
| Taux de ventilation spécifique (q) | 1,25 m³.m⁻².ₕ⁻¹ |
| Durée de l'essai | 10 jours |

Le composé organique volatil sur lequel on veut tester la capacité de traitement d'épuration de la dalle est du formaldéhyde. L'essai effectué comporte trois phases :
- une première phase, de J0 à J3, au cours de laquelle aucune quantité de formaldéhyde n'est introduite dans la chambre, afin de vérifier que la dalle et/ou les parois de la chambre n'émettent pas elles-mêmes de formaldéhyde,
- une seconde phase, de J4 à J6, au cours de laquelle du formaldéhyde est introduit de la chambre, afin de tester la capacité d'adsorption et d'épuration du formaldéhyde par la dalle,
- une troisième phase, de J7 à J10, au cours de laquelle aucune quantité de formaldéhyde n'est introduite dans la chambre, afin de tester si la dalle réémet le formaldéhyde adsorbé au cours de la seconde phase.

Pendant la première et la troisième phase, la quantité de formaldéhyde dans l'air est mesurée en sortie de la chambre d'essai, tandis que pendant la deuxième phase, la quantité de formaldéhyde dans l'air est mesurée en entrée et en sortie de la chambre d'essai.

Pour cet essai, la concentration de formaldéhyde dans l'air, injectée en entrée de la chambre d'essai, était de l'ordre de 135 µg.m⁻³. On veut mesurer si la dalle permet de diminuer cette concentration et dans quelle mesure. Les résultats obtenus sont résumés dans le tableau ci-après :

| | **génération formaldéhyde** | **C_{E}** | **C_{S}** |
|---|---|---|---|
| jour 3 | NON | | 3,5 |
| jour 4 | OUI | 130,0 | 31,0 |
| jour 5 | OUI | 136,2 | 35,0 |
| jour 6 | OUI | 133,1 | 38,1 |
| jour 7 | NON | | 13,5 |
| jour 10 | NON | | 7,8 |

| | | | |
|---|---|---|---|
| **Tableau 5 :** *Concentrations moyennes en formaldéhyde (*µ*g.m⁻³) en entrée (C_{E}) et en sortie (Cₛ) de la chambre d'essai* | | | |

Ainsi, il apparaît clairement que la dalle permet de réduire de manière significative la quantité de formaldéhyde dans l'air.

Cette dalle permet également de diminuer la concentration d'autres polluants dans l'air, comme par exemple la concentration d'acétaldéhyde. Par ailleurs, d'autres composants peuvent être ajoutés dans la dalle afin d'améliorer ses performances : par exemple, la dalle peut être utilisée sous forme de panneaux sandwich, en associant par exemple à deux dalles selon l'invention, une dalle de mousse polyuréthane ou une dalle de polystyrène afin d'augmenter les propriétés d'isolation thermique de la dalle. De la laine de roche et/ou des granulats peuvent également être incorporés au mélange.

## Revendications

1. Matériau de construction permettant de réduire la quantité de composés organiques volatiles présents dans l'air ambiant d'un local, **caractérisé en ce qu'**il comporte :
- entre 40% et 60% de fibres de bois formant de la laine de bois,
- entre 40% et 60% d'un liant hydraulique comprenant :
- entre 3% et 50% en poids de zéolithes,
- entre 20% et 70% en poids de ciment,
- entre 20% et 40% de chaux.

2. Matériau de construction selon la revendication 1, **caractérisé en ce que** les zéolithes sont incorporées au matériau de construction sous forme de granulats ou de particules, ces particules ayant un diamètre compris entre 0,005 mm et 0,05 mm.

3. Matériau de construction selon l'une quelconque des revendications précédentes, **caractérisé en ce que** les zéolithes sont composées d'une ou plusieurs des substances suivantes : SiO₂, MgO, Al₂O₃, Na₂O, CaO, TiO₂, K₂O, Fe₂O₃, Si/Al.

4. Matériau de construction selon la revendication précédente, **caractérisé en ce que** la zéolithe utilisée est une zéolithe naturelle.

5. Matériau de construction selon la revendication 3, **caractérisé en ce que** la zéolithe utilisée est une zéolithe artificielle.

6. Matériau de construction selon l'une quelconque des revendications précédentes, **caractérisé en ce que** le matériau de construction est dimensionné pour réduire la quantité d'un composé organique volatil pris dans un groupe formé par les aldéhydes, les formaldéhydes, les acétaldéhydes, le benzène, l'ammoniac, les fumées de cigarettes, le benzol.

7. Paroi isolante comportant un matériau de construction selon l'une quelconque des revendications précédentes.

8. Procédé de fabrication d'un élément de construction permettant de réduire la quantité de composés organiques volatiles présents dans l'air ambiant d'un local, **caractérisé en ce qu'**elle comporte les étapes suivantes :
- on réalise des préformes en laine de bois,
- on humidifie les préformes, de façon à ce que les préformes humidifiées aient un taux d'humidité compris entre 20% et 40%,
- on imprègne les préformes avec un mélange comportant de la chaux, du ciment et des zéolithes dans les proportions suivantes : entre 3 et 50% de zéolithes, entre 20% et 70% de ciment et entre 20% et 40% de chaux,
- on compacte les préformes,
- on sèche les préformes.

9. Procédé de fabrication d'un élément de construction selon la revendication précédente, **caractérisé en ce que** la composition et la quantité de zéolithes incorporées dans le matériau de construction sont choisies en fonction de la quantité et de la nature des composés organiques volatils à absorber.

10. Procédé de fabrication d'un élément de construction selon l'une quelconque des revendications 8 à 9, **caractérisé en ce que** les éléments de construction réalisés sont pris dans un groupe formé par les éléments suivants : des dalles, panneaux, plaques.
